# EUROPEAN PATENT SPECIFICATION

(11) **EP 1 668 266 B1**
(45) Date of publication and mention of the grant of the patent: **18.03.2009**
(21) Application number: 04774951.0
(22) Date of filing: 20.09.2004
(51) Int. Cl.: F16C 33/64, F16C 33/34, F16C 33/36, F16C 33/66

(54) **BEARING WITH REDUCED REFLOW**
LAGER MIT VERRINGERTEM RÜCKSTROM
ROULEMENT A REFLUX REDUIT

(30) Priority: 18.09.2003 NL 1024322
(43) Date of publication of application: 14.06.2006
(73) Proprietor: AB SKF, 415 50 Göteborg (SE)
(72) Inventor: LUGT, Pieter, Martin, NL-4132 BB Vianen (NL); TRIPP, John, Howard, NL-3723 KH Bilthoven (NL)
(74) Representative: Burö, Sven Peter
(86) International application number: PCT/NL2004/000648
(87) International publication number: WO 2005/026566

(56) References cited:
- DE-A- 3 339 040
- DE-U- 29 914 326
- US-A- 5 356 227
- US-A- 5 967 672
- US-A1- 2003 019 106

## Description

The invention is related to the field of rolling element bearings. Such bearings are applied in numerous fields, e.g. in the automotive industry, mills etc. In normal operation, the lubricant is sheared into the contact between the rollers and the raceways as a result of the speed of the surfaces thereof. Due to this so-called elasto-hydrodynamic lubrication, rollers and the raceways are separated by a lubricant film which is build up by hydrodynamic action. Such a lubricant film is of importance for obtaining a proper function of the roller bearing.

However, because of the high magnitude of the pressures in the contacts, backflow occurs which results in a thinner lubricant film. The pressure outside the bearing, in particular outside the contacts, is lower than in the contacts. This has the effect that there is a trend to expel the lubricant out of the contacts. The viscous shear causes the build up of this film. An optimum film is strongly determined by the thickness of the layers of lubricant in front of the contacts, which forms the supply of lubricants. If the supply is limited, which generally occurs in case of grease lubrication, high speed or very high viscosity lubrication, so-called starved lubrication occurs. A reduced firm is formed which may lead to metal-to-metal contact and a reduced bearing life. This reduction in lubricant layer in front of the contact is amongst other caused by a side flow.

DE 3339040 discloses a method of keeping a lubricant in place between two rollers in grooves during an oscillating movement by means of the grooves on a cylindrical inner ring.

The object of the invention is to provide a solution to this problem. This solution is obtained through a method for lubricating the rolling contacts in a rolling bearing having at least two rings which are each provided with raceways, as well as a at least one series of rolling elements which are in contact with said raceways, comprising the steps of:
- providing the raceway surface of at least one of the rings with a pattern which has an oblique characteristic in relation to the axis of the bearing,
- providing a lubricant on said raceway surface,
- making the rolling elements overroll over said patterned raceway surface over at least the full circumference of said raceway so as to displace the lubricant in axial direction under the influence of the engagement of the rolling elements with said pattern.

Due to the fact that the rolling elements overroll the oblique pattern, the wave of lubricant which is dynamically formed before the rolling element does not only have a component of motion in the rolling direction, but also a component of motion transverse to the rolling direction. Thus, the lubricant is driven somewhat in sideward direction with respect to the rolling direction. This phenomenon can be fruitfully applied to direct the lubricant in a certain desired direction, for instance opposite to the pressure induced motion of the lubricant. In particular in the case of starved lubrication conditions this effect is beneficial.

The pattern can have several shapes, but preferably the method according to the invention comprises the step of providing said raceway surface with a pattern which has a dominant oblique characteristic in relation to the axis of the bearing. In particular, the pattern can be obtained by the step of providing a grooved pattern.

Furthermore, the invention can comprise the step of providing a first grooved pattern on one part of the raceway surface, and a second grooved pattern on another part of the raceway surface, which raceway surface parts are next to each other in axial direction and which have oppositely oriented oblique patterns. In this way, the pressure induced loss of lubricant can be counteracted from both axial ends of the bearing.

The invention is furthermore related to a rolling element bearing which is lubricated according to the method described before, comprising at least two rings which are each provided with raceways, as well as a at least one series of rolling elements which are in contact with said raceways, the raceway surface of at least one of the rings being provided with a pattern which has an oblique characteristic in relation to the axis of the bearing. Further, the raceway surface can have a pattern which has screw type and/or spiral type characteristics. The rolling elements may also have such a pattern.

The raceway surface preferably has a grooved pattern. In a particular embodiment described before, a first grooved pattern may be provided on one part of the raceway surface, and a second grooved pattern on another part of the raceway surface, which raceway surface parts are next to each other in axial direction and which have oppositely oriented oblique patterns.

Such oppositely oriented oblique patterns are in particular fit for application in a line contact type of rolling element bearing, e.g. a. tapered roller, a cylindrical roller bearing, a spherical roller bearing etc.. For other bearings, other patterns appear to be beneficial. For instance, a spiral type groove pattern can be provided as well on one of the bearing surface elements in connection with a tapered rolling bearing. In such case, the rolling direction of the bearing is selected in such a way that the lubricant is driven towards the small diameter end of the bearing. Thereby, the spiral type groove pattern counteracts the tendency of the lubricant to flow towards the large diameter and under the influence of centrifugal forces which occur upon rotation in the bearing.

The oil is squeezed in the nip between the rolling element and the raceway. As a result, the oil is transported along the grooves in the desired direction.

Furthermore, the dominant oblique structure may comprise curved grooves, e.g. grooves which stretch over an arc of about 90°. One end of the arc is about parallel to the rolling direction, the other end about perpendicular thereto. Of course, grooves stretching over an arc smaller than 90° are flexible as well; the ends of the grooves in that case may be non parallel or non perpendicular with respect to the rolling direction. Also an arc of about 180° is possible, the top thereof pointing in the running direction.

The invention will now be described further with reference to an embodiment shown in the drawings.
Figure 1 shows a view in perspective of an outer bearing ring according to one embodiment of the invention.
Figure 2 shows a top view on the raceway of the bearing ring according to Figure 1, together with a roller.
Figure 3 shows a cross section through part of a roller and the raceway of the bearing ring.
Figure 4 shows a further embodiment.

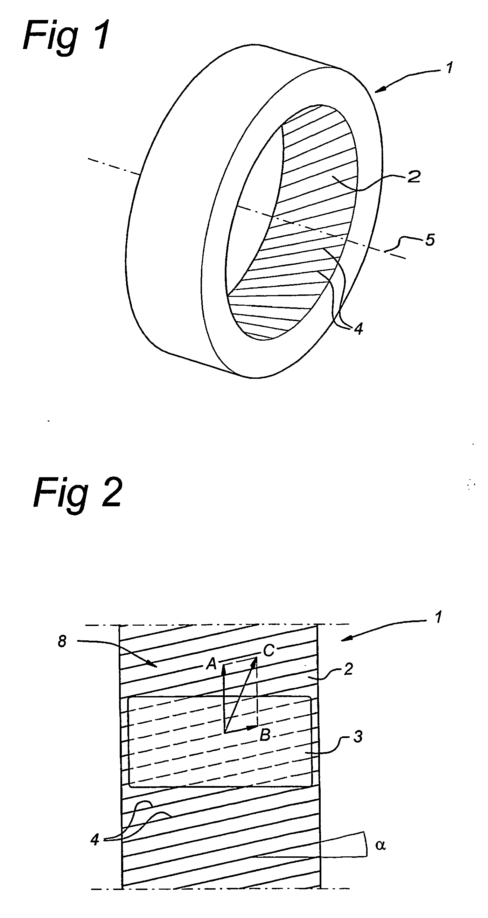

The bearing ring 1 as shown in Figure 1 comprises a raceway 2. The bearing ring 1 in question has to be assembled with an inner ring and a series of rollers one of which is shown in the top view of Figure 2. The said Figure 2 shows only one roller, but it is to be understood that of course a series of rollers extends in the circumferential direction of bearing ring 1.

As shown in the figures, the raceway surface 2 has a regular pattern of oblique grooves 4, which make an angle α which is lying between zero en ninety degrees with respect to the axis 5 of the bearing ring. Although the grooves shown are straight also curved grooves can be applied.

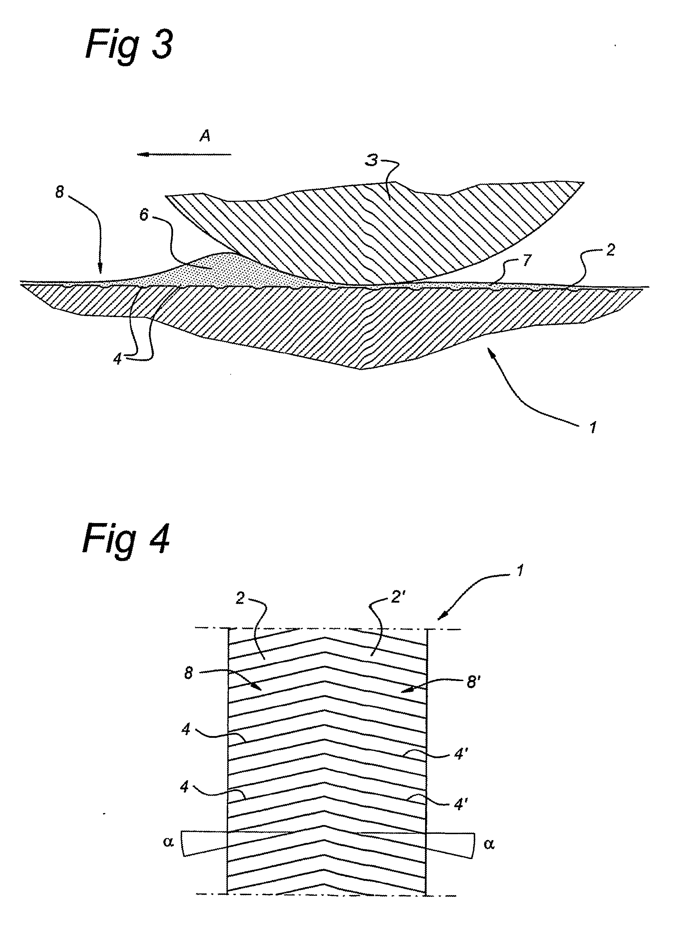

As is usual, during the rolling action of the roller 3 in the direction of the arrow of Figure 3 over the raceway surface 2 of the bearing ring 1 a wave of oil is driven forward over said raceway surface. The oil forms a lubricant layer 7 on top of the raceway surface 2, in such a way that there is no direct physical contact between the roller 3 and the bearing ring 1.

The proper function of the bearing in question is ensured as soon as a sufficient thickness of the lubricant film 7 between the rollers 3 and the bearing ring is maintained. However, under poor lubrication conditions, the lubricant tends to be squeezed out of the contact between the roller 3 and the bearing ring 1. Thus, the oil or grease is expelled towards the axially outer sides of the bearing ring. With the aim of promoting a lubricant flow over the raceway surface in such a way that also the middle part thereof is sufficiently lubricated as shown in Figure 4, a pattern 8, 8' of oblique lines has been applied on the bearing surface. The effect of this pattern 8, 8' is explained as follows.

This pattern has an arrow shape, whereby the point of the arrow is in the axial middle of the bearing surface. In the embodiment of Figure 4, the pattern 8 has grooves 4, 4' which have respective angles with respect to the axis 5 of the bearing which are equal to and α. Thereby a chevron type pattern 8 is obtained, in which the lubricant is driven towards the axial middle part of the bearing ring 1 from both axial sides thereof. The result is a decrease in lubricant sideflow and consequently an increase in bearing life.

As shown in Figure 2, it is also possible to apply a pattern 8 of oblique lines 9, with a spiral type groove on one of the raceways on rolling elements surfaces. In the embodiment of Figure 2, the roller 3 rolls in de direction of the arrow A over de raceway surface 2. As a consequence of the oblique orientation of the grooves 4, thereby the oil in the wave 6 is also driven in direction B, resulting in a general speed and direction of the oil as indicated with the arrow C. It is clear that thereby another flow, transverse and towards the middle part of the raceway surface, is obtained.

The invention contributes to the extension of relubrication intervals in the case of grease lubrication. The transport of oil, which is led from the grease which is partly sitting at the side of the rollers, towards and inside the running track(s) is promoted.

Although in the embodiments shown in the figures, straight grooves are shown, it is also possible top apply curved grooves. For instance, in the embodiment of figure 4 the arrow shaped grooves may be replaced by grooves which stretch according to an arc, the top of which being situated near the top of the arrow. The arc may stretch over 180°, the ends thereof then pointing downwards in the embodiment of figure 4. Smaller angled arcs are also possible of course.

## Claims

1. Method for lubricating the rolling contacts in a rolling element bearing having at least two rings (1) which are each provided with raceway, as well as a at least one series of rolling elements (3) which arc in contact with said raceways, comprising the steps of:
- providing a first grooved pattern (8) on one part (2) of a raceway surface of at least one of the rings (1), and a second grooved pattern (8') on another part (2') of the raceway surface, which groove patterns (8, 8') have a dominant oblique characteristic in relation to the axis (5) of the bearing, and which raceway surface parts (2, 2') are next to each other in axial direction and which have oppositely oriented oblique patterns (8, 8'),
- providing a lubricant (6. 7) on said raceway surface (2, 2'),
- making the rolling elements (3) overrol over said grooved patterned raceway surface (2, 2') over at least the full circumference of said raceway so as to displace the lubricant (6, 7) in axial direction under the influence of the engagement of the rolling elements (2, 2') with said pattern (8, 8').

2. Method according to claim 1, comprising the step of providing starved lubrication conditions on said raceway surface (2, 2').

3. Rolling element bearing which is lubricated according to the method of any of the preceding claims, comprising at least two rings (1) which are each provided with raceways, as well as a at least one series of rolling elements (3) which are in contact with said raceways, the raceway surface (2, 2') of at least one of the rings (1) being provided with a grooved pattern (8, 8') which has a dominant oblique characteristic in relation to the axis (5) of the bearing, wherein a first grooved pattern (8) is provided on one part (2) of the raceway surface, and a second grooved pattern (8') on another part (2') of the raceway surface (2), which raceway surface parts (2, 2') are next to each other in axial direction and which have oppositely oriented oblique patterns (8, 8').

4. Rolling element hearing according to claim 3, wherein the bearing is a line contact type rolling element bearing, e.g. a tapered roller bearing a cylindrical roller bearing, a spherical roller bearing etc.

5. Rolling element bearing according to one of claims 3-4, wherein the dominant oblique **characterised** comprises curved grooves.

6. Rolling element bearing which is lubricated according to the method of any of the preceding claims, comprising at least two rings (1) which are each provided with raceways, as well as a at least one series of rolling elements (3) which are in contact with said raceways, the raceway surface (2, 2') of at least one of the rings (1) and rolling elements (3) being provided with a spiral-type grooved pattern (8, 8') which has a dominant oblique characteristic in relation to the axis (5) of the bearing, wherein the hearing is a tapered roller bearing, and the rolling direction of the bearing is selected such that the lubricant is driven towards a small diameter end of the bearing by the grooved pattern.

7. Rolling element bearing according to claim 6, wherein the dominant oblique **characterised** comprises curved grooves.

## Patentansprüche

1. Verfahren zum Schmieren der Wälzkontakte in einem Wälzlager mit mindestens zwei Ringen (1), die jeweils mit Laufbahnen versehen sind, sowie mindestens einer Reihe von Wälzkörpern (3), die mit den Laufbahnen in Kontakt stehen, mit den folgenden Schritten:
- Bereitstellen eines ersten Nutenmusters (8) an einem Teil (2) der Laufbahnfläche mindestens eines der Ringe (1) und eines zweiten Nutenmusters (8') an einem anderen Teil (2') der Laufbahnfläche, wobei diese Nutenmuster (8, 8') eine vorherrschende Schrägeigenschaft bezüglich der Achse (5) des Lagers aufweisen und wobei diese Laufbahnflächenteile (2, 2') in Axialrichtung nebeneinander angeordnet und entgegengesetzt ausgerichtete Schrägmuster (8, 8') aufweisen,
- Bereitstellen eines Schmiermittels (6, 7) auf der Laufbahnfläche (2, 2'),
- Bewirken, dass die Wälzkörper (3) über die Laufbahnfläche (2, 2') mit dem Nutenmuster über mindestens den vollen Umfang der Laufbahn rollen, um das Schmiermittel (6, 7) unter Einfluss des Eingriffs der Wälzkörper (3) mit dem Muster (8, 8') in Axialrichtung zu verdrängen.

2. Verfahren nach Anspruch 1, mit dem Schritt des Bereitstellens von Zuständen geringer Schmierung auf der Laufbahnfläche (2, 2').

3. Wälzlager, das gemäß dem Verfahren nach einem der vorhergehenden Ansprüche geschmiert wird, mit mindestens zwei Ringen (1), die jeweils mit Laufbahnen versehen sind, sowie mindestens einer Reihe von Wälzkörpern (3), die mit den Laufbahnen in Kontakt stehen, wobei die Laufbahnfläche (2, 2') mindestens eines der Ringe (1) mit einem Nutenmuster (8, 8') versehen ist, das eine vorherrschende Schrägeigenschaft bezüglich der Achse (5) des Lagers aufweist, wobei ein erstes Nutenmuster (8) an einem Teil (2) der Laufbahnfläche vorgesehen ist und ein zweites Nutenmuster (8') an einem anderen Teil (2') der Laufbahnfläche (2) vorgesehen ist, wobei die Laufbahnflächenteile (2, 2') in Axialrichtung nebeneinander liegen und entgegengesetzt ausgerichtete Schrägmuster (8, 8') aufweisen.

4. Wälzlager nach Anspruch 3, wobei das Lager ein Linienberührungs-Wälzlager ist, zum Beispiel ein Kegelrollenlager, ein Zylinderrollenlager, ein Pendelrollenlager usw.

5. Wälzlager nach einem der Ansprüche 3 - 4, wobei die vorherrschende Schrägeigenschaft gekrümmte Nuten umfasst.

6. Wälzlager, das gemäß dem Verfahren nach einem der vorhergehenden Ansprüche geschmiert wird, mit mindestens zwei Ringen (1), die jeweils mit Laufbahnen versehen sind, sowie mindestens einer Reihe von Wälzkörpern (3), die mit den Laufbahnen in Kontakt stehen, wobei die Laufbahnfläche (2, 2') mindestens eines der Ringe (1) und die Wälzkörper (3) mit einem spiralförmigen Nutenmuster (8, 8') versehen sind, das eine vorherrschende Schrägeigenschaft bezüglich der Achse (5) des Lagers aufweist, wobei das Lager ein Kegelrollenlager ist und die Wälzrichtung des Lagers so gewählt ist, dass das Schmiermittel durch das Nutenmuster zu einem einen kleinen Durchmesser aufweisenden Ende des Lagers getrieben wird.

7. Wälzlager nach Anspruch 6, wobei die vorherrschende Schrägeigenschaft gekrümmte Nuten aufweist.

## Revendications

1. Procédé pour graisser les contacts roulants dans un palier à roulement ayant au moins deux bagues (1) qui sont pourvues chacune de chemins de roulement, de même que d'au moins une série d'éléments roulants (3) qui sont en contact avec lesdits chemins de roulement, comprenant les étapes consistant à :
- prévoir un premier motif rainuré (8) sur une partie (2) d'une surface de chemin de roulement d'au moins une des deux bagues (1), et un deuxième motif rainuré (8') sur une autre partie (2') de la surface de chemin de roulement, lesquels motifs rainurés (8, 8') ont une caractéristique oblique dominante par rapport à l'axe (5) du palier, et lesquelles parties de surface de chemin de roulement (2, 2') sont adjacentes l'une à l'autre dans la direction axiale et ont des motifs obliques orientés de façon opposée (8, 8'),
- prévoir un lubrifiant (6, 7) sur ladite surface de chemin de roulement (2, 2'),
- faire rouler les éléments roulants (3) au-dessus de ladite surface de chemin de roulement à motif rainuré (2, 2') au moins sur toute la circonférence dudit chemin de roulement de façon à déplacer le lubrifiant (6, 7) dans la direction axiale sous l'influence de l'engagement des éléments roulants (2, 2') avec ledit motif (8, 8').

2. Procédé selon la revendication 1, comprenant l'étape consistant à fournir des conditions de lubrification maigre sur ladite surface de chemin de roulement (2, 2').

3. Palier à roulement qui est lubrifié selon le procédé de l'une quelconque des revendications précédentes, comprenant au moins deux bagues (1) qui sont pourvues chacune de chemins de roulement, de même que d'au moins une série d'éléments roulants (3) qui sont en contact avec lesdits chemins de roulement, la surface de chemin de roulement (2, 2') d'au moins une des bagues (1) étant pourvue d'un motif rainuré (8, 8') qui a une caractéristique oblique dominante par rapport à l'axe (5) du palier, dans lequel un premier motif rainuré (8) est prévu sur une partie (2) de la surface de chemin de roulement, et un deuxième motif rainuré (8') sur une autre partie (2') de la surface de chemin de roulement (2), lesquelles parties de surface de chemin de roulement (2, 2') sont adjacentes l'une à l'autre dans la direction axiale et ont des motifs obliques orientés de façon opposée (8, 8').

4. Palier à roulement selon la revendication 3, dans lequel le palier est un palier à roulement du type à contact linéaire, par exemple un roulement à rouleaux coniques, un roulement à rouleaux cylindriques, un roulement à rouleaux sur rotule etc.

5. Palier à roulement selon l'une quelconque des revendications 3 à 4, dans lequel la caractéristique oblique dominante comporte des rainures courbes.

6. Palier à roulement qui est lubrifié selon le procédé de l'une quelconque des revendications précédentes, comprenant au moins deux bagues (1) qui sont pourvues chacune de chemins de roulement, de même que d'au moins une série d'éléments roulants (3) qui sont en contact avec lesdits chemins de roulement, la surface de chemin de roulement (2, 2') d'au moins une des bagues (1) et les éléments roulants (3) étant pourvus d'un motif rainuré de type en spirale (8, 8') qui a une caractéristique oblique dominante par rapport à l'axe (5) du palier, dans lequel le palier est un roulement à rouleaux coniques, et la direction de roulement du palier est sélectionnée de façon à ce que le lubrifiant soit entraîné vers une extrémité à petit diamètre du palier par le motif rainuré.

7. Palier à roulement selon la revendication 6, dans lequel la caractéristique oblique dominante comporte des rainures courbes.
